# EUROPEAN PATENT APPLICATION

(11) **EP 4 700 947 A1**
(43) Date of publication of application: **25.02.2026**
(21) Application number: 24905152.5
(22) Date of filing: 27.11.2024
(51) Int. Cl.: H01M 50/296, H01M 50/298, H01M 50/244, H01M 50/251, H01M 50/204, B60L 53/53

(54) **BATTERY AND ENERGY STORAGE APPARATUS**

(30) Priority: 08.07.2024 CN 202421596784 U
(71) Applicant: Contemporary Amperex Technology Co., Limited, Ningde, Fujian 352100 (CN); Contemporary Amperex Future Energy Technology (Shenzhen) Limited, Shenzhen, Guangdong 518100 (CN)
(72) Inventor: XU, Jinmei, Ningde, Fujian 352100 (CN); WANG, Lei, Ningde, Fujian 352100 (CN); ZHENG, Zhimin, Ningde, Fujian 352100 (CN); CHENG, Yong, Ningde, Fujian 352100 (CN)
(74) Representative: Gong, Jinping
(86) International application number: PCT/CN2024/135001
(87) International publication number: WO 2026/011656

(57) **Abstract**

The present disclosure provides a battery and an energy storage device. The energy storage device includes a cabinet body and the battery. The cabinet body is provided with an accommodating space, and the battery is arranged in the accommodating space. The battery includes a box body and an electric energy transmission group, the electric energy transmission group is arranged on one side surface of the box body in a first direction, the electric energy transmission group includes at least two power connection ends arranged in a second direction, the first direction is vertical to an up-down direction, and the second direction intersects with the first direction.

## Description

### CROSS-REFERENCE TO RELATED APPLICATIONS

The present disclosure claims priority to Chinese Patent Application 202421596784.4, entitled "BATTERY AND ENERGY STORAGE DEVICE" filed with the Chinese Patent Office on July 8, 2024, which is incorporated by reference in the present disclosure.

### TECHNICAL FIELD

The present disclosure relates to the technical field of energy storage, and particularly relates to a battery and an energy storage device.

### BACKGROUND

New energy batteries are more and more widely used in life and industry, for example, new energy automobiles equipped with batteries have been widely used, and batteries are increasingly used in the field of energy storage.

In related technologies, energy storage devices can be used for providing electrical energy for the new energy automobiles. The energy storage device includes a battery, and the battery includes a power connection terminal which is used for inputting and outputting electrical energy. The battery is a high-rate battery, and if the current in transmission is large, and the power connection terminal needs a large space in the energy storage device.

### SUMMARY OF THE INVENTION

In view of this, in a first aspect, an objective of an embodiment of the present disclosure is to provide a battery, and a space occupied by a power connection end of the battery can be reduced. The battery includes a box body and an electric energy transmission group, the electric energy transmission group is arranged on one side surface of the box body in a first direction, the electric energy transmission group includes at least two power connection ends arranged in a second direction, the first direction is vertical to an up-down direction, and the second direction intersects with the first direction.

In the embodiment, the box body of the battery is used for providing a space for accommodating a battery cell. The electric energy transmission group is arranged on the side surface of the box body in the first direction, and the electric energy transmission group includes the at least two power connection ends; a plurality of electric connection lines can be connected by the at least two power connection ends; in a case of large current, the electric energy can be transmitted by the plurality of electric connection lines; by increasing the number of the power connection ends in the electric energy transmission group, the sectional area of a single electric connection line can be reduced, and the size occupied by the single power connection end in the first direction is reduced; the at least two power connection ends are arranged in the second direction, that is, the power connection ends are arranged along a plane with the side surface, and thus, the space occupied by the electric energy transmission group in the first direction can be reduced on the condition of meeting battery rate and current demands. The battery can be used in an energy storage device, and the energy storage device includes a cabinet body which is used for providing a space for accommodating the battery; when the cabinet body provides a fixed accommodating space, the space occupied by the power connection ends can be reduced, the size of the box body can be larger, thus there will be a larger space in the box body for placing the battery cell, then the space in the cabinet body can be effectively utilized, and the energy value of the battery can be improved.

In some embodiments, the at least two power connection ends of the electric energy transmission group are arranged in the up-down direction, and the second direction is consistent with the up-down direction.

In the embodiment, the second direction is consistent with the up-down direction, and the power connection ends are arranged in the up-down direction, which facilitates installation and maintenance, makes wiring more convenient, and reduces the accommodating space occupied in the cabinet body.

In some embodiments, at least two electric energy transmission groups are provided, each including at least one positive electrode group.

In the embodiment, the positive electrode group and a negative electrode group can be used as current transmission ports, thus the batteries can be electrically connected to each other, or when the batteries are used for the energy storage device, the batteries can be electrically connected to other structures in the energy storage device.

In some embodiments, at least two electric energy transmission groups are provided, each including at least one negative electrode group.

In some embodiments, at least two electric energy transmission groups are provided, each including at least one positive electrode group and at least one negative electrode group.

In some embodiments, each electric energy transmission group of the battery is arranged in a third direction, the third direction intersects with the second direction, and the third direction is vertical to the first direction.

In the embodiment, the electric energy transmission groups are arranged in the third direction, thus the possibility of interference generated among the electric energy transmission groups can be reduced, the installation and maintenance are facilitated, and the convenience of wiring is ensured.

In some embodiments, the discharge current of the battery is not less than 500 A.

In the embodiment, the battery with the discharge current not less than 500 A is a high-rate battery, and the high-rate battery is high in charging or discharging speed.

In some embodiments, the battery includes a communication interface, and the communication interface and the electric energy transmission group are arranged on the same side surface of the box body.

In the embodiment, when the battery is used in the energy storage device, the energy storage device includes the cabinet body, the cabinet body is used for providing the space for accommodating the battery, the communication interface and the electric energy transmission group are arranged on the same side surface of the cabinet body in the first direction, and therefore the accommodating space, occupied by the battery, of the cabinet body in the third direction can be reduced.

In a second aspect, an embodiment of the present disclosure provides an energy storage device, which includes a cabinet body and the battery in any one of the embodiments of the present disclosure. The cabinet body is provided with an accommodating space, and the battery is arranged in the accommodating space.

The energy storage device provided by the embodiment of the present disclosure has the same beneficial effects as the above-mentioned battery.

In some embodiments, the energy storage device includes electric connection lines, the electric connection lines have connection sections connected to the power connection ends, the connection sections extend in the third direction, the third direction intersects with the second direction, and the third direction is vertical to the first direction.

In the embodiment, the electric energy transmission groups are arranged in the third direction, thus possibility of interference generated when the electric connection lines are arranged among the electric energy transmission groups can be reduced, the installation and maintenance are facilitated, and the convenience of wiring is ensured.

In some embodiments, the sum of outer diameters of all the electric connection lines of a single electric energy transmission group is D1, 29.0 mm≤D1≤30.2 mm.

Exemplarily, D1 may be 29.0 mm, 29.1 mm, 29.2 mm, 29.3 mm, 29.4 mm, 29.5 mm, 29.6 mm, 29.7 mm, 29.8 mm, 29.9 mm, 30.0 mm, 30.1 mm or 30.2 mm and the like.

In some embodiments, at least two batteries are stacked in the up-down direction to form a battery unit.

In the embodiment, the battery unit provides electric energy for electrical devices such as the new energy automobile through discharging. Stable current and voltage output is provided through the battery unit, and therefore the safety and high efficiency in the charging process are ensured.

### DESCRIPTION OF DRAWINGS

FIG. 1 is a structural schematic diagram of an energy storage device in an embodiment of the present disclosure;
FIG. 2 is a local structural schematic diagram of a battery and an electric connection line in an embodiment of the present disclosure;
FIG. 3 is a local structural schematic diagram of a battery and an electric connection line at a second visual angle shown in FIG. 2; and
FIG. 4 is a local structural schematic diagram of a battery and an electric connection line at a third visual angle shown in FIG. 2

Description of reference numerals
1000, energy storage device; 100, battery; 10, box body; 20, electric energy transmission group; 21, power connection end; 200, electric connection line; 201, connection section; 30, thermal management assembly; 31, water inlet; 32, water outlet; 40, communication interface; and 300, cabinet body.

### DETAILED DESCRIPTION

The implementation modes of the present disclosure are further described below in conjunction with the accompanying drawings and embodiments. The following embodiments are used for illustrating the present disclosure, but cannot be used for limiting the scope of the present disclosure.

In the description of the embodiments of the present disclosure, it is to be noted that the orientation or positional relationship indicated by the terms "up", "down", "first direction", "second direction", "third direction", etc. are the orientation or positional relationship shown on the basis of the accompanying drawings, and are only for the convenience of description of the embodiments of the present disclosure and for the purpose of simplifying the description, and do not indicate or imply that apparatuses or elements referred to must have a specific orientation, be constructed and operated in a particular orientation, and therefore cannot be construed as limiting the embodiments of the present disclosure. In addition, the terms "first", "second", "third" are used for descriptive purposes only and should not be construed as indicating or implying relative importance.

In the description of the embodiments of the present disclosure, unless otherwise specified and limited, it is to be noted that the term "connection" is to be broadly understood, for example, the connection may be fixed connection, detachable connection, or integrated connection, mechanical connection, or electrical connection, direct connection, or indirect connection through an intermediate medium. For those of ordinary skill in the art, the specific meaning of the above terms in the embodiments of the present disclosure may be understood on a case-by-case basis.

In the description of this specification, the reference terms "some embodiments", "exemplarily", etc., are intended to mean the specific features, structures, materials, or features described in conjunction with the embodiment or example contained in at least one embodiment or example of the present disclosure. In this specification, the schematic description of the above terms does not have to be for the same embodiments or examples. Furthermore, the specific features, structures, materials, or features described may be combined in an appropriate manner in any one or more embodiments or examples. In addition, without contradiction, those skilled in the art can combine the different embodiments or examples described in the present disclosure and the features of the different embodiments or examples.

It is be noted that in the embodiment of the present disclosure, at least two refers to two or more, and plurality refers to two or more.

In the related technology, an energy storage device includes a cabinet body and a battery, and the battery is positioned in the cabinet body. The cabinet body has a sufficient space in an up-down direction, but the size of the cabinet body in a horizontal direction is limited due to the influence of the occupied area; the size of the cabinet body in the horizontal direction is limited, the battery is usually provided with a power connection end; and the power connection end is connected to a cable for conveying electric energy. The higher the rate of the battery is, the higher the current is, the larger the sectional area of the cable is required, and the larger the space occupied by the power connection end is. In a case that the battery is a high-rate battery, the current is relatively high, and the sectional area of the cable is relatively large, thus the power connection end will occupy relatively large space of the cabinet body in the horizontal direction, and as a result, the available space for the battery is reduced; and if the size of the battery is relatively small, the available space for a battery cell in the battery is reduced, and the energy storage device cannot provide a larger energy value.

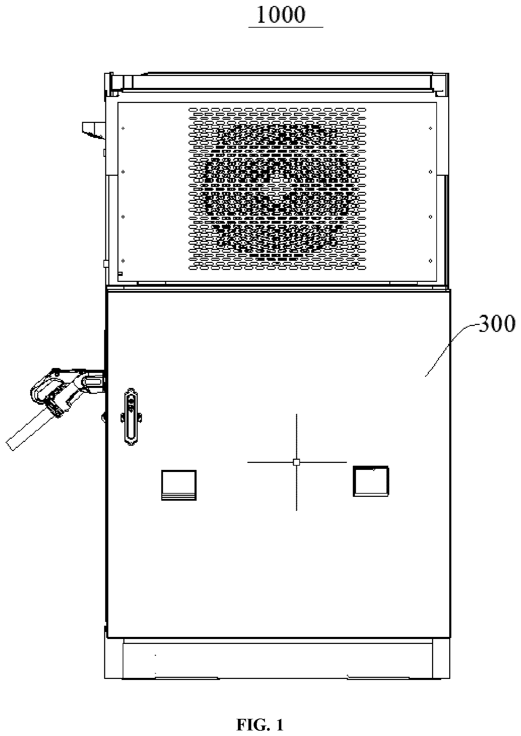

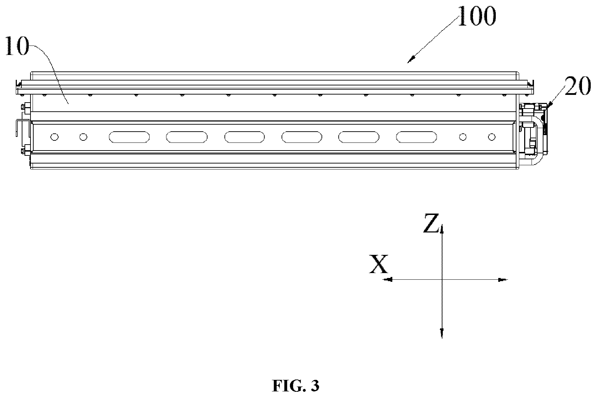

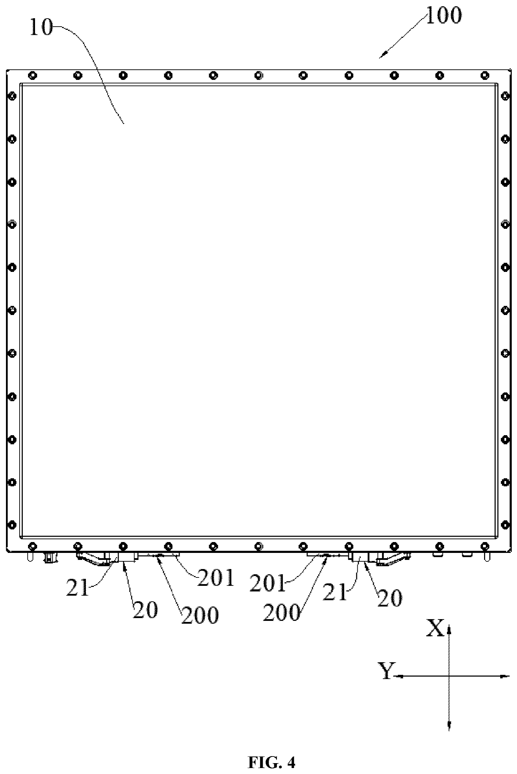

In view of this, with reference to FIG. 1 to FIG. 4, an embodiment of the present disclosure provides an energy storage device 1000, which includes a cabinet body 300 and a battery 100. The cabinet body 300 is provided with an accommodating space; and the battery 100 is arranged in the accommodating space.

The energy storage device 1000 can be used for an energy storage power station, a wind power generation system, a solar power generation system, a mobile power system or a temporary power supply system and the like. The energy storage device 1000 may store electric energy as required and output the electric energy in a proper time. For example, the energy storage device 1000 may store the electric energy when the electricity consumption is low, and provide electric energy for relevant users or electrical devices during peak electricity consumption.

Exemplarily, the energy storage device 1000 according to the present disclosure may be used as a charging device for providing electric energy to the electrical devices such as a new energy automobile.

Exemplarily, the energy storage device 1000 may include a thermal management module, a main control module, a general control module, a power distribution module, a fire fighting module and other modules.

Exemplarily, the thermal management module may include a liquid cooling unit; and the liquid cooling unit provides cooling liquid that can condition the temperature of the battery cell for each battery apparatus through a pipeline.

As an example, the main control module includes a Slave Battery Management Unit (SBMU), a fusion switch and other modules.

As an example, the general control module may be used as a battery management unit of the energy storage device 1000 and is used for monitoring and managing the energy storage device 1000. The general control module may monitor information such as current, voltage, power, charge state or temperature of the energy storage device 1000. For example, it can control the charge and discharge current, voltage and the like of the energy storage device 1000. As an example, the general control module includes an Insulation Monitoring Module (IMM), a Master Battery Management Unit (MBMU), an EtherNet (ETH), an optical fiber conversion module and other modules.

As an example, a fire fighting system includes a control panel, a detector, an alarm device and the like, and is used for detecting, alarming or extinguishing an energy storage system.

As an example, a power distribution device can be used for distributing power to electric modules of the energy storage device 1000.

An embodiment of the present disclosure further provides a battery 100 which can be used for the energy storage device 1000, and can reduce the space occupied by power connection ends 21 in the battery 100 and increase the energy value of the battery 100 in the cabinet body 300 with a fixed volume. The battery 100 includes a box body 10 and an electric energy transmission group 20; the electric energy transmission group 20 is arranged on one side surface of the box body 10 in a first direction; the electric energy transmission group 20 includes at least two power connection ends 21 arranged in a second direction, the first direction is vertical to an up-down direction, and the second direction intersects with the first direction.

The battery 100 includes a battery cell. The battery 100 may include one or at least two battery cells.

Exemplarily, the at least two battery cells in the battery 100 may be connected in series or in parallel or in series-parallel connection, and the series-parallel connection refers to that the at least two battery cells are connected in series and in parallel. The at least two battery cells may be directly connected in series or in parallel or in series-parallel connection; and definitely, the at least two battery cells may be connected in series or in parallel or in series-parallel connection to form a battery cell module, and then at least two battery cell modules are connected in series or in parallel or in series-parallel connection as a whole.

The battery cell may be a secondary battery, and the secondary battery refers to a battery cell that can activate an active material in a charging mode for continuous use after the battery cell is discharged.

The battery cell may be a lithium ion battery cell, a sodium ion battery cell, a sodium-lithium ion battery cell, a lithium metal battery cell, a sodium metal battery cell, a lithium-sulfur battery cell, a magnesium ion battery cell, a nickel-hydrogen hydride battery cell, a nickel-cadmium battery cell or a lead-acid battery cell, etc.

The battery cell may include a shell, an electrode assembly and an electrolyte; and the electrode assembly and the electrolyte are both located in the shell. The electrode assembly includes a positive electrode plate, a negative electrode plate and an isolation film; the isolation film is located between the positive electrode plate and the negative electrode plate; and active ions in the electrolyte migrate between the positive electrode plate and the negative electrode plate to realize charging and discharging.

The battery cell may be a cylindrical battery cell, a prismatic battery cell or a battery cell in other shapes. The prismatic battery cell includes a square-shell battery cell or a multi-prism battery cell; and the multi-prism battery cell is a hexagonal prism battery cell and the like, there is no special limitation in the present disclosure.

The battery cell may be arranged in the box body 10. The box body 10 may be a sealed box body, so that the safety and the stability of the battery 100 are ensured, reliable dustproof and waterproof performance is improved; and it can be applied to scenarios with a more severe, humid and even water-immersed environments.

The power connection ends 21 are used for connecting electric connection lines 200. The power connection ends 21 are used for transmitting electric energy, for example, the battery 100 outputs the electric energy to the electrical device or a power grid inputs the electric energy to the battery 100.

In the embodiment, the box body 10 of the battery 100 is used for providing the space for accommodating the battery cell. The electric energy transmission group 20 is arranged on the side surface of the box body 10 in the first direction and includes at least two power connection ends 21, and a plurality of electric connection lines 200 can be connected by the at least two power connection ends 21; in a case of large current, the electric energy can be transmitted by the plurality of electric connection lines 200; by increasing the number of the power connection ends 21 in the electric energy transmission group 20, the sectional area of a single electric connection line 200 can be reduced, and the size occupied by the single power connection end 21 in the first direction is reduced; the at least two power connection ends 21 are arranged in the second direction, that is, the power connection ends 21 are arranged along a plane with the side surface, and thus, the space occupied by the electric energy transmission group 20 in the first direction can be reduced on the condition of meeting the rate of the battery 100 and current demands. When the battery 100 is used for the energy storage device 1000, and the fixed accommodating space is provided by the cabinet body 300, the space occupied by the power connection ends 21 is reduced, the size of the box body 10 can be larger, thus there is a larger space in the box body 10 to place the battery cell, the space in the cabinet body 300 can be effectively utilized, and the energy value of the battery 100 can be improved.

Exemplarily, the box body 10 is in a hexahedron shape, such as a cube or a cuboid. For example, a plane vertical to the up-down direction is used as a projection plane, and the projection of the box body 10 is rectangular.

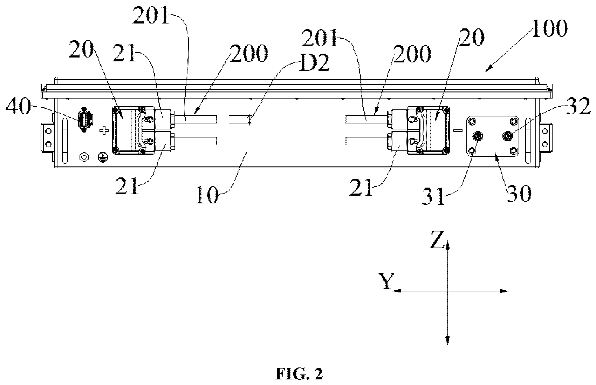

With reference to FIG. 2 to FIG. 4, Z represents the up-down direction, X represents the first direction, and Y represents the third direction.

In some embodiments, with reference to FIG. 2, at least two power connection ends 21 of the electric energy transmission group 20 are arranged in the up-down direction, and the up-down direction is consistent with the second direction.

In the embodiment, the second direction is consistent with the up-down direction, and the power connection ends 21 are arranged in the up-down direction, which facilitates installation and maintenance, improves the convenience of wiring, and reduces the accommodating space occupied in the cabinet body 300.

In some embodiments, with reference to FIG. 2, at least two electric energy transmission groups 20 are provided, each including at least one positive electrode group and at least one negative electrode group.

The positive electrode groups and the negative electrode groups can be used as current transmission ports, so that batteries 100 can be electrically connected to each other, or the batteries 100 can be electrically connected to other structures in the energy storage device 1000.

It is to be understood that the power connection ends 21 of the single electric energy transmission group 20 have the same the polarity, for example, if the single electric energy transmission group 20 is a positive electrode group, each power connection end 21 of the electric energy transmission group 20 is a positive electrode. For example, if the single electric energy transmission group 20 is a negative electrode group, each power connection end 21 of the electric energy transmission group 20 is a negative electrode.

Each single battery 100 may be provided with two or more than two electric energy transmission groups 20.

In some embodiments, at least two electric energy transmission groups 20 are provided, each including at least one positive electrode group.

In some embodiments, at least two electric energy transmission groups 20 are provided, each including at least one negative electrode group.

In some embodiments, with reference to FIG. 2, all electric energy transmission groups 20 of the battery 100 are located on the same side surface of the box body 10.

In the embodiment, the accommodating space, occupied by all electric energy transmission groups 20 in the battery 100, of the cabinet body 300 can be reduced. The space in the cabinet body 300 can be effectively utilized, the energy value of the battery 100 can be improved, and thus the total energy value of the energy storage device 1000 can be further improved.

In some embodiments, with reference to FIG.2, each electric energy transmission group 20 of the battery 100 is arranged in the third direction, the third direction intersects with the second direction, and the third direction is vertical to the first direction.

In the embodiment, the electric energy transmission groups 20 are arranged in the third direction, so that the possibility of interference generated among the electric energy transmission groups 20 can be reduced, installation and maintenance can be facilitated, and the convenience of wiring is improved.

In some embodiments, with reference to FIG. 2, the energy storage device 1000 includes an electric connection line 200, the electric connection line 200 is provided with a connection section 201 connected to the power connection end 21, the connection section 201 extends in the third direction, the third direction intersects with the second direction, and the third direction is vertical to the first direction.

In the embodiment, the electric energy transmission groups 20 are arranged in the third direction, so that the possibility of interference generated when the electric connection lines 200 are arranged among the electric energy transmission groups 20 can be reduced, the installation and maintenance can be facilitated, and the convenience of wiring is improved.

Exemplarily, the second direction is consistent with the up-down direction, and the third direction is vertical to the second direction. Therefore, the electric connection lines 200 of each electric energy transmission group 20 are arranged in the up-down direction, each electric energy transmission group 20 is arranged along the side surface of the box body 10 in the horizontal direction, so that the electric connection lines 200 in the battery 100 are more compact in integral arrangement.

In some embodiments, the sum of outer diameters of all electric connection lines 200 of the single electric energy transmission group 20 is D1, 29.0 mm≤D1≤30.2 mm. Exemplarily, D1 may be 29.0 mm, 29.1 mm, 29.2 mm, 29.3 mm, 29.4 mm, 29.5 mm, 29.6 mm, 29.7 mm, 29.8 mm, 29.9 mm, 30.0 mm, 30.1 mm or 30.2 mm and the like.

Exemplarily, all electric connection lines 200 in the single electric energy transmission group 20 have the same outer diameters.

Exemplarily, with reference to FIG. 2, the single electric energy transmission group 20 includes two electric connection lines 200, the outer diameters of the electric connection lines 200 are D2, 14.5 mm≤D2≤15.1 mm. Exemplarily, D2 may be 14.5 mm, 14.6 mm, 14.7 mm, 14.8 mm, 14.9 mm, 15.0 mm or 15.1 mm and the like. The mm is length unit and is expressed by millimeter.

In some embodiments, the discharging current of the battery 100 is not smaller than 500 A.

In the embodiment, the battery 100 with the discharge current not less than 500 A is a high-rate battery 100, and the high-rate battery 100 is high in charging or discharging speed.

It is to be noted that A refers to current unit ampere.

In some embodiments, at least two batteries 100 are stacked in the up-down direction to form a battery unit. The battery unit provides electric energy for the electrical device such as the new energy automobile through discharging. Stable current and voltage output is provided through the battery unit, and therefore the safety and high efficiency in the charging process are ensured.

There may be one or more battery units, for example, two, three or four.

There may be four, five, six, seven or eight batteries 100 in each battery unit.

Exemplarily, there may be four, five, six, seven or eight batteries 100 in the energy storage device 1000.

Exemplarily, the at least two batteries 100 in the energy storage device 1000 may be connected in series or in parallel or in series-parallel connection, and the series-parallel connection refers to that the at least two batteries 100 are connected in series and in parallel. At least two batteries 100 can be directly connected in series or in parallel or in series-parallel connection. Definitely, the at least two batteries 100 may be connected in series or in parallel or in series-parallel connection to form a battery module, and at least two battery modules are connected in series or in parallel or in series-parallel as a whole.

Exemplarily, the batteries 100 in the energy storage device 1000 are connected in series, the positive electrode groups and negative electrode groups of all the batteries 100 are sequentially connected, and the negative electrode group of the first battery 100 and the positive electrode group of the last battery 100 are treated as external connection points of the battery units.

Exemplarily, all the batteries 100 are connected in parallel, the positive electrode groups of all the batteries 100 are connected to each other, and the negative electrode groups of all the batteries 100 are connected to each other.

In some embodiments, with reference to FIG. 2, the battery 100 includes a communication interface 40, and the communication interface 40 and the electric energy transmission group 20 are arranged on the same side surface of the box body 10. Exemplarily, the energy storage device 1000 further includes a battery management system, and the communication interface 40 is used for connecting a battery management system of the energy storage device 1000 to transmit state information of the battery 100. The state information of the battery 100 includes but is not limited to voltage, current, charging demand, charging real-time data and the like.

In the embodiment, the communication interface 40 and the electric energy transmission group 20 are arranged on the same side surface of the box body 10 in the first direction, so that the accommodating space, occupied by the battery 100 in the third direction, of the cabinet body 300 can be reduced.

In some embodiments, with reference to FIG. 2, the battery 100 includes a thermal management assembly 30, the thermal management assembly 30 includes a water inlet 31 and a water outlet 32, and cooling liquid can enter the battery from the water inlet 31 and flow out from the water outlet 32 to condition the temperature of the battery 100.

In some embodiments, the energy storage device 1000 includes the cabinet body 300 and the battery 100. The discharge current of the battery 100 is not less than 500 A. The cabinet body 300 is provided with the accommodating space; the battery 100 is arranged in the accommodating space; the battery 100 includes the box body 10 and the electric energy transmission groups 20; the electric energy transmission groups 20 are arranged on one side surface of the box body 10 in the first direction, the electric energy transmission groups 20 include two power connection ends 21 arranged in second direction, the second direction is consistent with the up-down direction, and the first direction is vertical to the up-down direction. Two electric energy transmission groups 20 are provided, one electric energy transmission group 20 serves as the positive electrode group, and the other electric energy transmission group 20 serves as the negative electrode group. All the electric energy transmission groups 20 of the battery 100 are located on the same side surface of the box body 10. Each electric energy transmission group 20 of the battery 100 is arranged in the third direction. The energy storage device 1000 includes the electric connection lines 200; the single electric energy transmission group 20 is connected to two electric connection lines 200; and the outer diameter of the electric connection lines 200 is D1, and D1 is 14.8 mm. The electric connection lines 200 have connection sections 201 connected to the power connection ends 21, the connection sections 201 extend in the third direction, the third direction intersects with the second direction, and the third direction is vertical to the first direction. Four batteries 100 are stacked in the up-down direction to form the battery unit. The battery 100 further includes the communication interface 40, and the communication interface 40 and the electric energy transmission group 20 are arranged on the same side surface of the box body 10 in the first direction.

In the embodiment, the cabinet body 300 is used for providing the space for accommodating the battery 100, and the box body 10 of the battery 100 is used for providing the space for accommodating the battery cell. The electric energy transmission group 20 is arranged on the side surface of the box body 10 in the first direction and includes at least two power connection ends 21, and a plurality of electric connection lines 200 can be connected by the at least two power connection ends 21; in a case of large current, the electric energy can be transmitted by the plurality of electric connection lines 200; by increasing the number of the power connection ends 21 in the electric energy transmission group 20, the sectional area of a single electric connection line 200 can be reduced, and the size occupied by the single power connection end 21 in the first direction is reduced; the at least two power connection ends 21 are arranged in the second direction, that is, the power connection ends 21 are arranged along a plane with the side surface, and thus, the space occupied by the electric energy transmission group 20 in the first direction can be reduced on the condition of meeting the rate of the battery 100 and current demands. When the fixed accommodating space is provided by the cabinet body 300, the space occupied by the power connection ends 21 is reduced, the size of the box body 10 can be larger, thus there is a larger space in the box body 10 to place the battery cell, the space in the cabinet body 300 can be effectively utilized, and the energy value of the battery 100 can be improved. The power connection ends 21 are arranged in the up-down direction, which facilitates installation and maintenance, improves the convenience of wiring, and reduces the accommodating space occupied in the cabinet body 300. The positive electrode groups and the negative electrode groups can be used as current transmission ports, so that batteries 100 can be electrically connected to each other, or the batteries 100 can be electrically connected to other structures in the energy storage device 1000. The accommodating space, occupied by all electric energy transmission groups 20 in the battery 100, of the cabinet body 300 can be reduced. The space in the cabinet body 300 can be effectively utilized, the energy value of the battery 100 can be improved, and thus the total energy value of the energy storage device 1000 can be further improved. The electric energy transmission groups 20 are arranged in the third direction, so that the possibility of interference generated when the electric connection lines 200 are arranged among the electric energy transmission groups 20 can be reduced, installation and maintenance can be facilitated, and the convenience of wiring is improved. The battery unit provides electric energy for the electrical device such as the new energy automobile through discharging. Stable current and voltage output is provided through the battery unit, and therefore the safety and high efficiency in the charging process are ensured. The communication interface 40 and the electric energy transmission group 20 are arranged on the same side surface of the box body 10 in the first direction, so that the accommodating space, occupied by the battery 100 in the third direction, of the cabinet body 300 can be reduced.

The foregoing is only a preferred embodiment of the present disclosure and is not intended to limit the present disclosure, which is subject to various changes and variations for those skilled in the art. Any modifications, equivalent replacements, improvements, etc., made within the spirit and principles of this disclosure shall be included in the scope of protection of this disclosure.

## Claims

1. A battery, comprising a box body and an electric energy transmission group, wherein the electric energy transmission group is arranged on one side surface of the box body in a first direction, the electric energy transmission group includes at least two power connection ends arranged in a second direction, the first direction is vertical to an up-down direction, and the second direction intersects with the first direction.

2. The battery according to claim 1, wherein the at least two power connection ends of the electric energy transmission group are arranged in the up-down direction, and the second direction is consistent with the up-down direction.

3. The battery according to claim 1 or 2, wherein at least two electric energy transmission groups are provided, each comprising at least one positive electrode group and/or at least one negative electrode group.

4. The battery according to claim 3, wherein each electric energy transmission group of the battery is arranged in a third direction, the third direction intersects with the second direction, and the third direction is vertical to the first direction.

5. The battery according to any one of claims 1 to 4, wherein the discharge current of the battery is not less than 500 A.

6. The battery according to any one of claims 1 to 5, wherein the battery comprises a communication interface, and the communication interface and the electric energy transmission group are arranged on the same side surface of the box body.

7. An energy storage device, comprising:
a cabinet body having an accommodating space; and
the battery according to any one of claims 1 to 6, which is arranged in the accommodating space.

8. The energy storage device according to claim 7, wherein the energy storage device comprises electric connection lines, the electric connection lines have connection sections connected to the power connection ends, the connection sections extend in the third direction, the third direction intersects with the second direction, and the third direction is vertical to the first direction.

9. The energy storage device according to claim 8, wherein the sum of outer diameters of all the electric connection lines of a single electric energy transmission group is D1, 29.0 mm≤D1≤30.2 mm.

10. The energy storage device according to claim 9, wherein at least two batteries are stacked in an up-down direction to form a battery unit.
